# FASCICULE DE BREVET EUROPEEN

(11) **EP 2 232 815 B1**
(45) Date de publication et mention de la délivrance du brevet: **26.02.2020**
(21) Numéro de dépôt: 08863120.5
(22) Date de dépôt: 03.12.2008
(51) Int. Cl.: H04L 29/06, H04W 12/06, H04W 12/08, H04W 12/12

(54) **PROCÉDÉ DE CONTRÔLE D'APPLICATIONS INSTALLÉES SUR UN MODULE DE SÉCURITÉ ASSOCIÉ À UN TERMINAL MOBILE, MODULE DE SÉCURITÉ, TERMINAL MOBILE ET SERVEUR ASSOCIÉS**
VERFAHREN ZUR STEUERUNG VON ANWENDUNGEN, DIE AUF EINEM MIT EINEM MOBILEN ENDGERÄT VERKNÜPFTEN SICHERHEITSMODUL INSTALLIERT SIND, VERKNÜPFTES SICHERHEITSMODUL, MOBILES ENDGERÄT UND SERVER
METHOD OF CONTROLLING APPLICATIONS INSTALLED ON A SECURITY MODULE ASSOCIATED WITH A MOBILE TERMINAL, ASSOCIATED SECURITY MODULE, MOBILE TERMINAL AND SERVER

(30) Priorité: 07.12.2007 FR 0759659
(43) Date de publication de la demande: 29.09.2010
(73) Titulaire: Orange, 75015 Paris (FR)
(72) Inventeur: RAFFARD, Rémi, 75010 Paris (FR); FOURREAU, Laurent, F-14210 Evrecy (FR)
(86) Numéro de dépôt international: PCT/FR2008/052192
(87) Numéro de publication internationale: WO 2009/077706

(56) Documents cités:
- EP-A- 1 918 840
- WO-A-00/58811
- WO-A-2007/076476
- US-A- 5 014 234
- US-A1- 2004 024 688
- US-A1- 2004 214 560
- GSMA: "mobile NFC technical guidelines - Version 2.0" GSMA, [Online] novembre 2007 (2007-11), XP002495767 Extrait de l'Internet: URL:http://www.gsmworld.com/documents/nfc/ gsma_nfc2_wp.pdf> [extrait le 2008-09-09]

## Description

La présente invention se rapporte au domaine des télécommunications, et plus particulièrement à celui de la sécurité des applications hébergées sur un élément sécurisé d'un terminal mobile.

La plupart des terminaux mobiles existants permettent, non seulement d'établir des communications téléphoniques, mais également d'exécuter un certain nombre d'applications téléchargées dans un module sécurisé lié au terminal. Ce module de sécurité peut être un module mémoire du terminal ou un support amovible (par exemple une carte à puce d'abonné) inséré dans le terminal.

Le téléchargement et la mise à jour de ces applications sont réalisés par une connexion classique du terminal mobile avec un serveur de gestion, par exemple le serveur d'un fournisseur de services.

Parmi les applications présentes sur le module de sécurité, un certain nombre d'entre elles peuvent être des applications dites "sans contact". Ces applications sont exécutées à la demande d'un équipement extérieur, appelé "borne sans contact". Un module spécifique, dit "module sans contact", installé sur le terminal mobile, permet le dialogue entre le module de sécurité et la "borne sans contact".

La perte ou le vol du module de sécurité peut entraîner une utilisation frauduleuse et non limitée des applications installées sur ce module de sécurité. De même, un utilisateur qui a perdu les droits sur une application, par exemple en raison d'une absence de paiement, peut continuer à utiliser ladite application tant qu'il ne se connecte pas au serveur de gestion.

La solution qui consiste, pour l'émetteur du module de sécurité ou pour le fournisseur des services, à bloquer l'application qu'il gère, impose l'établissement d'une connexion téléphonique classique entre l'émetteur ou le fournisseur de services et le terminal mobile dans lequel est inséré le module de sécurité. Or, un utilisateur frauduleux peut empêcher l'établissement d'une telle connexion et, en conséquence, empêcher un tel blocage.

De plus, même si l'établissement de la connexion est possible, le délai entre le moment du vol ou de la perte du module de sécurité et l'envoi de la commande de blocage peut être suffisamment long pour permettre à un utilisateur frauduleux d'utiliser les applications sans contact installées sur le module de sécurité.

Il existe donc un besoin de contrôler l'utilisation d'un module de sécurité pour améliorer la sécurité des applications installées sur un module de sécurité associé à un terminal mobile.

A cet effet la présente invention propose un procédé de contrôle d'applications installées sur un module de sécurité associé à un terminal mobile et apte à effectuer des transactions liées aux applications, avec un équipement. Selon l'invention, ce procédé comporte les étapes suivantes :
- incrémentation d'au moins une valeur de transaction dans une mémoire du module de sécurité, lors d'une transaction réalisée par une application installée sur le module de sécurité
- comparaison de la au moins une valeur de transaction avec une valeur prédéterminée associée,
- si au moins une valeur de transaction atteint sa valeur prédéterminée associée, envoi d'au moins une commande de connexion à un serveur de gestion de l'application,
- blocage d'au moins une application en cas d'échec de ladite au moins une commande.

Ainsi, le procédé selon l'invention permet de limiter le nombre de transactions réalisées par un module de sécurité si le terminal mobile ne peut se connecter à un serveur de gestion. Il permet de limiter le nombre d'opérations qu'un utilisateur peut effectuer s'il n'a pas l'autorisation de les effectuer. Le procédé selon l'invention augmente ainsi la sécurité de l'utilisation du module de sécurité

Selon une caractéristique de l'invention, l'étape d'incrémentation s'effectue sur une valeur de transaction commune à toutes les applications présentes sur le module de sécurité lors d'une transaction réalisée par une quelconque des applications.

Selon une autre caractéristique de l'invention, utilisée seule ou en combinaison avec la caractéristique précédente, l'étape d'incrémentation s'effectue sur une valeur de transaction liée à une application présente sur le module de sécurité lors d'une transaction réalisée par cette application.

Selon de mode de réalisation, l'étape de blocage comporte une étape d'arrêt de la transaction en cours. Ainsi, tant que le module de sécurité ne peut se connecter au serveur, la transaction n'est pas réalisée.

Selon un autre mode de réalisation, l'étape de blocage comporte une étape de transmission à au moins une application d'un ordre empêchant toute sélection future de ladite au moins une application. L'utilisateur doit alors contacter le ou les fournisseurs de services liés aux applications pour obtenir le déblocage éventuel de ces applications. Le déblocage ne sera alors effectué qu'après vérification des droits de l'utilisateur par le fournisseur de services.

Dans un mode de réalisation, l'étape de blocage est effectuée après envoi de plusieurs commandes de connexion. Ainsi, plusieurs tentatives infructueuses sont nécessaires pour obtenir le blocage. Ceci permet d'éviter des blocages intempestifs.

Selon un mode de réalisation, en cas de réussite de la commande de connexion, le procédé comporte en outre une étape de réception d'une mise à jour des droits liés à au moins une application, transmise par le serveur de gestion, en fonction du résultat d'une vérification des droits utilisateur associés à ladite au moins une application.

Le procédé peut comprendre en outre une étape de mise à jour d'au moins une valeur de transaction et/ou une étape de réception d'un ordre empêchant toute sélection future de ladite au moins une application.

Ainsi, en cas de réussite de la commande de connexion, le serveur appelé par le terminal mobile peut mettre à jour les droits utilisateur liés à une ou plusieurs applications s'il dispose des droits de gestion de ces applications.

L'invention concerne également un procédé de gestion d'applications installées sur un module de sécurité associé à un terminal mobile et apte à effectuer des transactions liées aux applications, comportant les étapes suivantes:
- réception d'une commande de connexion émise par le terminal mobile suite à l'atteinte par au moins une valeur de transaction d'une valeur prédéterminée associée,
- vérification des droits utilisateur pour au moins une application installée sur le module de sécurité,
- en fonction du résultat de la vérification, mise à jour d'au moins une valeur de transaction et/ou blocage d'au moins une application.

L'invention concerne aussi un module de sécurité contenant au moins une application apte à effectuer au moins une transaction avec un équipement caractérisé en ce qu'il comporte :
- des moyens d'incrémentation d'au moins une valeur de transaction,
- des moyens de comparaison de la au moins une valeur de transaction avec une valeur prédéterminée associée,
- des moyens de transmission d'au moins une commande de connexion à un serveur de gestion de l'application si la valeur du compteur atteint la valeur prédéterminée,
- des moyens de blocage d'au moins une application en cas d'échec de ladite au moins une commande.

L'invention concerne également un terminal mobile comportant un module de sécurité tel que décrit précédemment.

L'invention concerne aussi un serveur de gestion d'au moins une application installée sur un module de sécurité associé à un terminal mobile, comprenant :
- des moyens de réception d'une commande de connexion émise par le terminal mobile, suite à l'atteinte par au moins une valeur de transaction de sa valeur prédéterminée associée,
- des moyens de vérification des droits utilisateur pour au moins une application installée sur le module de sécurité,
- des moyens de transmission d'une commande de mise à jour d'au moins une valeur de transaction et/ou de blocage d'au moins une application.

L'invention concerne enfin un produit programme d'ordinateur comprenant des instructions pour mettre en œuvre les étapes du procédé de contrôle telles que décrites précédemment, lorsqu'il est chargé et exécuté par un processeur du module de sécurité.

D'autres particularités et avantages de la présente invention apparaitront dans la description suivante de trois modes de réalisation donnés à titre d'exemples non limitatifs, en référence aux dessins annexés, dans lesquels :
- la figure 1 est un schéma général présentant le contexte de l'invention,
- la figure 2 est un schéma bloc représentant un module de sécurité selon l'invention,
- la figure 3 est un schéma illustrant les différentes étapes du procédé de contrôle et de gestion d'applications selon un premier mode de réalisation de l'invention,
- la figure 4 est un schéma illustrant les différentes étapes du procédé de contrôle et de gestion d'applications selon un deuxième mode de réalisation de l'invention, et
- la figure 5 est un schéma illustrant les différentes étapes du procédé de contrôle et de gestion d'applications selon un troisième mode de réalisation de l'invention.

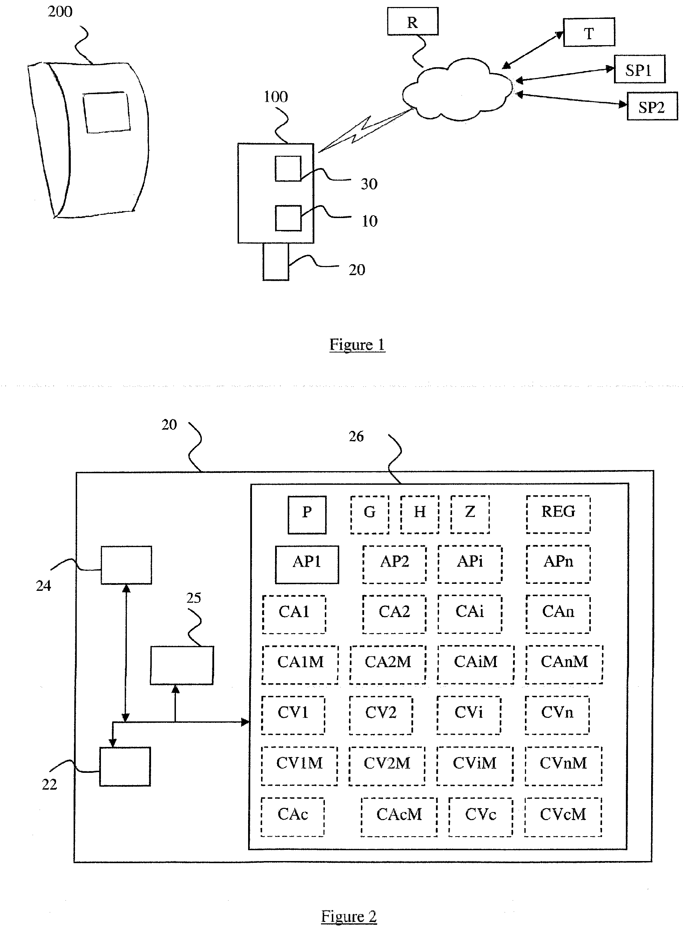

En référence à la figure 1, un utilisateur dispose d'un terminal mobile 100 sur lequel plusieurs applications ont été installées. Ce terminal mobile est par exemple un téléphone mobile ou un PDA (pour "Personal Digital Assistant").

Ce terminal mobile 100 comporte un module de communication sans contact 10 permettant un dialogue entre le terminal 100 et un équipement 200 appelé par la suite "borne sans contact". Le module sans contact est par exemple un module compatible NFC (pour "Near Field Communication").

Le terminal mobile possède également un module de communication 30, par exemple un module GSM, permettant une communication, via un réseau de communication R, avec des serveurs distants, par exemple avec une plateforme de services T ou des serveurs SP1, SP2 de fournisseurs de services. Cette communication est par exemple une communication "OTA" (pour "Over The Air"), c'est-à-dire une communication sans fil classique. A titre d'alternative, le terminal mobile est relié au réseau R pour une ligne téléphonique filaire.

Le terminal mobile 100 comporte également un module sécurisé 20 qui est une carte à mémoire amovible compatible avec les spécifications de GlobalPlatform (GlobalPlatform Card Spécification - version 2.1.1 de mars 2006).

A titre d'alternative, ce module peut être une zone mémoire sécurisée du terminal mobile ou un support amovible d'un autre type (par exemple une carte d'abonné de type SIM ou UICC (pour "Universal Integrated Circuit Card") ou une carte à mémoire hébergeant un élément sécurisé (SD card, Embeded Secure contrôler ...)).

En référence à la figure 2, le module de sécurité comprend notamment un microprocesseur 22, un module d'émission-réception 24, une ou plusieurs mémoires 25 de type RAM et une ou plusieurs mémoires 26 de type ROM ou EEPROM dans laquelle sont enregistrés des programmes pouvant être exécutés par le microprocesseur 22. Parmi ces programmes, figurent un programme principal P (appelé OS-carte pour "operating system") et une ou plusieurs applications (AP1, AP2...).

Parmi ces applications, une ou plusieurs sont des applications sans contact et fonctionnent en utilisant le module sans contact 10. Une telle application est, par exemple, une application de contrôle d'accès à un transport en commun. Cette application sera alors utilisée à chaque fois que le porteur du mobile voudra accéder à ce transport. A chaque utilisation, un dialogue entre l'application stockée sur le module de sécurité 20 et une borne sans contact 200 installée à l'entrée du moyen de transport permet à la borne de vérifier que le porteur du mobile est autorisé à emprunter ce moyen de transport. Ce dialogue permet par exemple de vérifier que le porteur du mobile possède un abonnement valide pour ce moyen de transport ou de décrémenter un nombre de tickets stockés dans la carte d'abonné. Ce dialogue entre le module de sécurité 20 et la borne sans contact 200 est effectué via le module sans contact 10.

De façon connue, la borne sans contact 200 émet un champ magnétique. Lorsque l'utilisateur du mobile se présente à l'entrée du moyen de transport, son terminal mobile entre dans le champ magnétique émis par la borne 200. Une transaction est alors effectuée entre l'application sélectionnée présente sur le module de sécurité 20 et la borne 200. Plus précisément, lors de l'entrée du terminal mobile dans le champ magnétique de la borne sans contact, le module sans contact reçoit de la borne sans contact un message MS de sélection (select AID) contenant l'identifiant d'une application AP1 et le transmet au module de sécurité. Lors de la réception de ce message MS, le module de sécurité commande l'exécution de l'application AP1 sélectionnée. En fonction de l'application sélectionnée, un certain nombre de messages (M1, M2, ...Mn) vont ensuite être échangés entre l'application et la borne sans contact.

L'échange des messages entre le module sans contact et la carte d'abonné s'effectue de façon classique, par exemple en utilisant le protocole SWP pour "Single Wire Protocol" ou l'interface S²C pour "SigIn-SigOut-Connection".

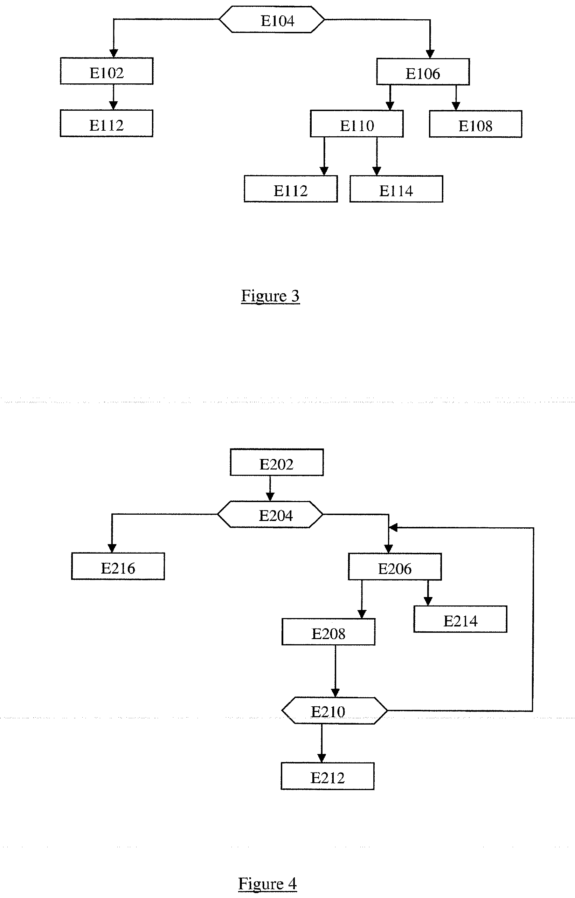

Un premier mode de réalisation va maintenant être décrit, en référence à la figure 3.

Lors d'une étape préalable (non référencée), suite à l'installation de l'application AP1 dans une mémoire du module de sécurité et avant toute sélection de l'application, une valeur de transaction CA1, référencée en figure 2, associée à l'application AP1, est initialisée, par exemple à la valeur 0, par le module de sécurité 20 et enregistrée dans une mémoire 26 du module de sécurité.

Lors de la réception d'un message de sélection, l'application AP1 du module de sécurité 20, au cours d'une étape E104, compare la valeur CA1 avec une valeur prédéterminée associée CA1M, référencée en figure 2, stockée dans une mémoire 26 du module de sécurité.

La valeur prédéterminée CA1M est par exemple enregistrée dans la mémoire 26 du module de sécurité lors d'une étape de configuration du module de sécurité.

Si la valeur CA1 est inférieure à la valeur CA1M, l'application AP1 du module de sécurité 20, au cours d'une étape E102, incrémente d'une valeur de 1 la valeur CA1. Puis, la transaction se poursuit de façon classique (étape E112).

A titre d'alternative, lors de l'étape E102, l'incrémentation peut être d'une valeur supérieure à 1. Par exemple, dans le cas où l'application AP1 est une application de paiement, l'incrémentation est de 1 pour les transactions de faible montant (par exemple inférieurs à 20 euros), de 2 pour les transactions de montant moyen (par exemple entre 20 et 100 euros) et de 3 pour les transactions de montant élevé (par exemple, supérieur à 100 euros. Ainsi, la valeur CA1 augmente plus rapidement si les transactions sont de montant élevé et atteint plus rapidement la valeur prédéterminée associée CA1M.

Si lors de l'étape de comparaison E104, la valeur CA1 est supérieure ou égale à la valeur CA1M, l'application AP1 envoie à un serveur de gestion de l'application AP1, par exemple le serveur SP1 du fournisseur de services lié à l'application AP1, lors d'une étape E106, via le module de communication 30 du terminal mobile et le réseau R, une demande de connexion. Cette demande est, par exemple, un ordre SMS MO, spécifié dans la norme ETSI TS 102.223, contenant une demande de vérification de l'état de l'application AP1. Dans ce cas, l'application AP1 transmet cet ordre en utilisant l'API STK (pour "Application Interface Sim ToolKit" en anglais) spécifiée dans la norme ETSI TS 10. 267. A titre d'alternative, la demande de connexion est une demande de connexion BIP CAT-TP spécifiée dans la norme ETSI TS 102.127

Si cette demande de connexion ne peut aboutir, par exemple en raison d'une indisponibilité du serveur de gestion ou en raison d'une défaillance volontaire ou involontaire du module de communication 30 du terminal mobile ou pour toute autre raison, l'application AP1 est notifiée. Cette notification comporte par exemple un code d'erreur, par exemple, un code d'erreur transmis par le module de communication 30 indiquant qu'il n'a pas reçu de réponse. Dans ce cas, l'application AP1 ne poursuit pas la transaction. La transaction s'arrête par non réponse au message de sélection (étape E108).

Si la demande de connexion aboutit, le serveur de gestion de l'application vérifie, lors d'une étape E110, les droits de l'utilisateur concernant l'application AP1 et l'application AP1 reçoit, via le module de communication 30 et le réseau R, une réponse du serveur, par exemple sous la forme d'un ou plusieurs SMS ("pour Short Message System").

Si l'utilisateur possède toujours les droits pour cette application, la réponse contient un ordre de réinitialisation de la valeur CA1, par exemple une remise à 0 de cette valeur. La transaction est ensuite poursuivie de façon classique (étape E112).

En revanche, si l'utilisateur ne possède plus les droits par exemple, parce qu'il n'a pas renouvelé son paiement pour le service ou si le serveur de gestion de l'application a été informé du vol ou de la perte du module de sécurité par l'utilisateur, le message de réponse contient cette information. Cette information est par exemple un bit ou un octet d'état comportant une valeur prédéterminée. La transaction n'est pas poursuivie (étape E114). Dans ce cas, le serveur de gestion peut également envoyer un ordre classique de blocage de l'application, par exemple un ordre "Set Status" défini dans les spécifications GlobalPlatform (GlobalPlatform Card Spécification - version 2.1.1 de mars 2006), qui aura pour effet d'empêcher toute sélection future de l'application AP1.

Dans le mode de réalisation décrit, les étapes E102 à E114 sont exécutées par l'application AP1. A titre d'alternative, ces étapes sont réalisées par une application G, référencée sur la figure 2, installée sur le module de sécurité 20 et appelée par l'application AP1.

Un deuxième mode de réalisation va maintenant être décrit en référence à la figure 4.

Dans ce deuxième mode de réalisation, lors d'une étape préalable (non référencée), une valeur de transaction CAc et une valeur de tentatives de connexion CVc de la mémoire 26 du module de sécurité sont initialisées à la valeur 0 par le module de sécurité.

Dans ce mode de réalisation, la valeur de transaction CAc et la valeur de tentatives de connexion CVc sont communes à l'ensemble des applications installées sur le module de sécurité.

Suite à l'exécution ou en cours d'exécution d'une application AP1 par le module de sécurité 20, l'application AP1, au cours d'une étape E202, incrémente d'une valeur de 1 la valeur CAc. Puis, en fin de transaction, l'application AP1 commande l'exécution d'une application Z, référencée en figure 2, installée sur le module de sécurité 20.

A titre d'alternative, la valeur CAc est incrémentée par l'application Z.

Encore à titre d'alternative, l'application Z est déclenchée par le terminal mobile suite à l'exécution d'une transaction.

Au cours d'une étape suivante E204, l'application Z compare la valeur CAc avec une valeur prédéterminée associée CAcM stockée dans une mémoire 26 du module de sécurité 20.

Si la valeur CAc est inférieure à la valeur CAcM, la transaction est terminée et le module de sécurité se positionne de nouveau en attente d'une nouvelle transaction (retour à l'application principale P) (étape E216).

Si la valeur CAc est supérieure ou égale à la valeur CAcM, l'application Z du module de sécurité envoie à un serveur de gestion T, lors d'une étape E206, une demande de connexion via le module de communication 30 du terminal mobile et le réseau R. Cette demande est, par exemple, un SMS qui contient une demande de vérification de l'état des applications installées sur le module de sécurité.

Si cette demande ne peut aboutir, par exemple en raison d'une indisponibilité du serveur de gestion ou en raison d'une défaillance volontaire ou involontaire du module de communication 30 du terminal mobile ou pour toute autre raison, le module de sécurité 20 reçoit aucune réponse ou un message de réponse comportant un code d'erreur. Dans ce cas, lors d'une étape E208, le module de sécurité incrémente la valeur de tentatives de connexion CVc.

Puis, lors d'une étape E210, il compare la valeur CVc à une valeur prédéterminée associée CVcM.

CVc représente le nombre de tentatives de connexion effectuée par le module de sécurité et CVcM représente le nombre de tentatives maximum pouvant être réalisées.

Si la valeur CVc est inférieure à la valeur CVcM, la demande de connexion est réitérée après un délai prédéterminé.

Si la valeur CVc est supérieure ou égale à la valeur CVcM, le nombre maximum de tentatives de connexion a été atteint, le module de sécurité, au cours d'une étape E212, bloque le fonctionnement des applications qu'il contient en envoyant à chacune d'elles un ordre de blocage (par exemple, une commande Set Status). Ainsi, lors de la réception ultérieure d'un message de sélection, l'application sélectionnée renverra un message d'erreur indiquant qu'elle ne peut être sélectionnée.

Si la demande de connexion aboutit, le serveur de gestion vérifie, lors d'une étape E214, les droits de l'utilisateur concernant les différentes applications installées sur le module de sécurité. Cette vérification est effectuée par le serveur T s'il possède l'ensemble des informations et/ou le serveur de gestion T s'adresse à un ou plusieurs serveurs (SP1, SP2...) des fournisseurs de services associés aux différentes applications. Suite à cette vérification, le module de sécurité reçoit une réponse du serveur, par exemple sous la forme d'un ou plusieurs SMS ("pour Short Message System").

Il est précisé que pour des raisons de sécurité, les échanges entre le module de sécurité et un serveur distant sont chiffrés par des clés partagées par le module de sécurité et le serveur.

Si l'utilisateur possède toujours les droits pour ces applications, la réponse contient un ordre de réinitialisation des valeurs CAc et CVc, par exemple une remise à 0 de ces valeurs.

En revanche, si l'utilisateur ne possède plus les droits sur une ou plusieurs applications, par exemple, parce qu'il n'a pas renouvelé son paiement pour le service ou si le serveur de gestion a été informé du vol ou de la perte du module de sécurité par l'utilisateur, le message de réponse contient cette information, par exemple, sous la forme d'un bit ou d'un octet. Dans ce cas, le serveur de gestion peut également envoyer un ordre classique de blocage des applications concernées; cet ordre aura pour effet d'empêcher toute sélection future de ces applications.

L'étape E202 doit être réalisée en cours ou suite à une transaction. En revanche, les étapes 204 à E216 peuvent être réalisées indépendant d'une transaction. Ainsi, ces étapes peuvent être exécutées, par exemple, lors de la mise sous tension du module de sécurité.

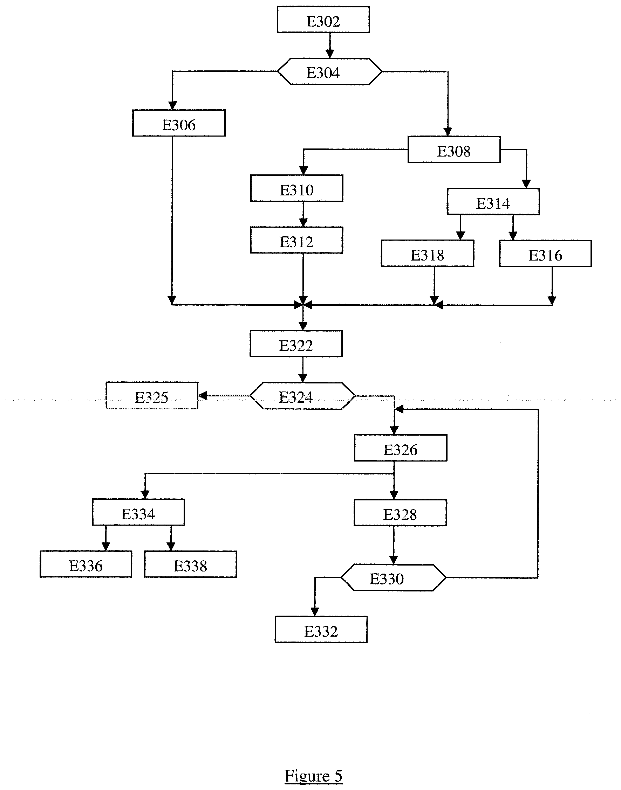

Un troisième mode de réalisation va maintenant être décrit en référence à la figure 5.

Dans ce troisième mode de réalisation, lors d'une étape préalable (non référencée), suite à l'installation de l'application AP1 dans une mémoire du module de sécurité et avant toute sélection de l'application, une valeur de transaction CA1 associée à l'application AP1 et enregistrée dans une mémoire 26 du module de sécurité 20, est initialisée à la valeur 0 par le module de sécurité. De plus, une valeur de transaction CAc et une valeur CVc sont initialisées à la valeur 0 par le module de sécurité et enregistrées dans la mémoire 26 du module de sécurité. La valeur CA1 est une valeur de transaction liée à l'application AP1. La valeur CAc est une valeur de transaction liée à l'ensemble des applications installées sur le module de sécurité. La valeur CVc est un nombre de tentatives de connexion. CVc est associée à l'ensemble des applications installées sur le module de sécurité.

Lors de la réception d'un message de sélection, l'application AP1 du module de sécurité 20, au cours d'une étape E302, incrémente d'une valeur de 1 la valeur CA1.

Au cours d'une étape suivante E304, l'application AP1 compare la valeur CA1 avec une valeur prédéterminée CA1M stockée dans une mémoire du module de sécurité.

Si la valeur CA1 est inférieure à la valeur CA1M, la transaction se poursuit (étape E306).

En revanche, si la valeur CA1 est supérieure ou égale à la valeur CA1M, l'application AP1 envoie à un serveur de gestion T, via le module de communication 30 du terminal mobile et le réseau R, une demande de connexion, lors d'une étape E308. Cette demande de connexion est par exemple un SMS contenant une demande de vérification de l'état de l'application AP1.

Si cette demande ne peut aboutir, par exemple en raison d'une indisponibilité du serveur de gestion ou en raison d'une défaillance volontaire ou involontaire du module de communication du terminal mobile ou pour toute autre raison, l'application AP1 ne reçoit aucune réponse ou un message d'indisponibilité contenant un code d'erreur. Dans ce cas, l'application AP1 ne poursuit pas la transaction. La transaction s'arrête par non réponse au message de sélection (étape E310).

De plus, lors d'une étape E312, l'application AP1 commande la mise à jour d'une mémoire REG, référencée en figure 2, du module de sécurité. Par exemple, cette mémoire est constituée d'un ou plusieurs octets dans lesquels un bit est réservé pour chaque application installée. Ce bit est initialisé à une valeur, par exemple 0, à l'installation de l'application et est mis à une autre valeur, par exemple 1, lorsque l'application n'a pas réussi à se connecter au serveur de gestion T.

Si la demande de connexion aboutit, le serveur de gestion T, lors d'une étape E314, vérifie les droits de l'utilisateur concernant l'application AP1, par exemple en s'adressant au serveur SP1 de gestion de l'application AP1 et l'application AP1 reçoit une réponse du serveur, par exemple sous la forme d'un ou plusieurs SMS ("pour Short Message System").

Si l'utilisateur possède toujours les droits pour cette application, la réponse contient un ordre de réinitialisation de la valeur CA1, par exemple une remise à 0 de cette valeur et un ordre de mise à jour du registre REG. La transaction est ensuite poursuivie de façon classique (étape E316).

En revanche, si l'utilisateur ne possède plus les droits par exemple, parce qu'il n'a pas renouvelé son paiement pour le service ou si le serveur de gestion de l'application a été informé du vol ou de la perte du module de sécurité par l'utilisateur, le message de réponse contient cette information, par exemple sous la forme d'un ou plusieurs octets et la transaction n'est pas poursuivie (étape E318). Dans ce cas, le serveur de gestion peut également envoyer un ordre classique de blocage de l'application qui aura pour effet d'empêcher toute sélection future de l'application AP1.

Suite aux étapes E306, E312, E316 ou E318, l'application AP1 commande le lancement d'une application H, référencée en figure 2, installée sur le module de sécurité 20.

L'application H, au cours d'une étape E322, incrémente d'une valeur de 1 la valeur de transaction CAc. Au cours d'une étape suivante E324, l'application H compare la valeur CAc avec une valeur prédéterminée CAcM, associée à la valeur CAc et stockée dans une mémoire 26 du module de sécurité.

Si la valeur CAc est inférieure à la valeur CAcM, le module de sécurité se positionne de nouveau en attente d'une nouvelle transaction (retour à l'application principale P) (étape E325).

Si la valeur CAc est supérieure ou égale à la valeur CAcM, l'application H envoie à un serveur de gestion, lors d'une étape E326, une demande de connexion, via le module de communication 30 du terminal mobile et le réseau R. Cette demande est, par exemple, un SMS contenant une demande de vérification de l'ensemble des applications.

Si cette demande ne peut aboutir, par exemple en raison d'une indisponibilité du serveur de gestion ou en raison d'une défaillance volontaire ou involontaire du module de communication 30 du terminal mobile ou pour toute autre raison, le module de sécurité 20 ne reçoit aucune réponse ou un message d'indisponibilité contenant un code d'erreur. Dans ce cas, au cours d'une étape E328, le module de sécurité incrémente la valeur de tentatives de connexion CVc et compare cette valeur avec une valeur prédéterminée CVcM associée, lors d'une étape E330.

Si la valeur CVc est inférieure à CVcM, la demande de connexion est réitérée après un délai prédéterminé.

Si la valeur CVc est supérieure ou égale à la valeur CVcM, le nombre maximum de tentatives a été atteint, le module de sécurité bloque le fonctionnement des applications qu'il contient en envoyant à chacune d'elles un ordre de blocage (par exemple une commande Set Status), lors d'une étape E332. Ainsi, lors de la réception ultérieure d'un message de sélection, une application renverra un message d'erreur indiquant qu'elle ne peut être sélectionnée.

A titre d'alternative, l'ordre de blocage est un ordre de suppression de l'application dans la mémoire du module de sécurité, par exemple un ordre "delete" défini par les spécifications Global Platform

Si la demande de connexion aboutit, le serveur de gestion, lors d'une étape E334, vérifie les droits de l'utilisateur concernant les différentes applications installées sur le module de sécurité. Il accède au contenu de la mémoire REG pour connaître les applications ayant déclenché l'appel et compare ce contenu avec une valeur stockée dans une mémoire du serveur de gestion. Il transmet ensuite une réponse au module de sécurité, par exemple sous la forme d'un ou plusieurs SMS ("pour Short Message System"). Cette réponse peut contenir une demande de mise jour de la mémoire REG.

Si l'utilisateur possède toujours les droits pour ces applications (étape E336), la réponse est un ordre de réinitialisation des valeurs CAc et CVc, par exemple une remise à 0 de ces valeurs. L'ordre de réinitialisation peut contenir une mise à jour de la mémoire REG.

En revanche, si l'utilisateur ne possède plus les droits sur une ou plusieurs applications par exemple, parce qu'il n'a pas renouvelé son paiement pour un ou plusieurs services ou si le serveur de gestion a été informé du vol ou de la perte du module de sécurité par l'utilisateur, le serveur de gestion, lors d'une étape E338, envoie au module de sécurité des ordres de réinitialisation des valeurs CA1, CAc, CVc et REG et un ordre classique de blocage des applications concernées; cet ordre aura pour effet d'empêcher toute sélection future de ces applications. Plus précisément, le serveur transmet un SMS par application à bloquer et un SMS contenant un ordre d'écriture des valeurs CA1, CAc, CVc et REG dans la mémoire 26 du module de sécurité.

Il est rappelé que, pour des raisons de sécurité, l'écriture ou la lecture d'une zone mémoire d'un module de sécurité par un serveur nécessite l'utilisation de clés cryptographiques partagées par le module de sécurité et le serveur.

Les valeurs CA1M, CAcM et CVcM sont des valeurs prédéterminées enregistrées dans une mémoire 26 du module de sécurité lors d'une phase d'initialisation. Elles peuvent être modifiées par un serveur de gestion habilité. Pour des raisons de sécurité, cette modification est effectuée par échanges de messages chiffrés en utilisant des clés partagées par le serveur de gestion et le module de sécurité.

Le procédé a été décrit avec une seule application AP1. Dans le cas où plusieurs applications AP1, AP2...APn sont installées sur le module de sécurité, une valeur de transaction CAi liée à l'application Api et une valeur prédéterminée CAiM, associée sont enregistrés pour chaque application APi et une seule valeur de transaction CAc, une seule valeur de transaction maximum associée, une seule valeur de tentatives de connexion CVc et une seule valeur de tentatives maximum CVcM sont stockées pour l'ensemble des applications.

Dans un autre mode de réalisation, une valeur de tentatives de connexion CVi et une valeur de tentatives de connexions maximum CViM associée peuvent être également définie pour chaque application Api. Le module de sécurité procèdera alors au blocage de l'application APi lorsque le nombre de tentatives de connexion CVi aura atteint le nombre maximum CViM

A tout moment, un serveur de gestion possédant les clés peut accéder au module de sécurité et remettre à jour les valeurs de transaction liées aux applications CA1 à CAn, la valeur de transaction commune CAc et la valeur de tentatives de connexion CVc liées à l'ensemble des applications et le registre REG.

L'invention a été décrite avec des applications sans contact. Elle peut également s'appliquer si tout ou partie des applications installées sur le module de sécurité sont sans contact.

## Revendications

1. Procédé de contrôle d'applications installées sur un module de sécurité (20) associé à un terminal mobile (100), ledit module étant apte à effectuer des transactions liées à au moins une application avec un équipement (200), et à envoyer au moins une commande de connexion à un serveur de gestion de ladite application via le terminal mobile associé, **caractérisé en ce qu'**il comporte les étapes suivantes :
- incrémentation (E102, E202, E302, E322) d'au moins une valeur de transaction (CA1, CAc) dans une mémoire du module de sécurité, lors d'une transaction réalisée par l'application ;
- comparaison (E104, E204, E304, E324) de la valeur de transaction avec une valeur prédéterminée associée (CA1M, CAcM) ;
- si la valeur de transaction atteint sa valeur prédéterminée associée, envoi (E106, E206, E308, E326), par une application du module de sécurité (AP1, Z), d'au moins une commande de connexion à un serveur de gestion de l'application apte à vérifier des droits d'utilisation de ladite application ; et
- en cas d'échec de la commande de connexion, un blocage (El 14, E212, E310, E332) empêchant toute sélection future de ladite au moins une application ;
- si la connexion est établie et si les droits d'utilisation de ladite application sont valides alors, réception, du serveur de gestion, d'un ordre de réinitialisation de ladite valeur de transaction.

2. Procédé selon la revendication 1, **caractérisé en ce que** l'étape d'incrémentation (E202, E322) s'effectue sur une valeur de transaction commune à toutes les applications présentes sur le module de sécurité lors d'une transaction réalisée par une quelconque des applications.

3. Procédé selon la revendication 1, **caractérisé en ce que** l'étape d'incrémentation (E102, E302) s'effectue sur une valeur de transaction liée à une application présente sur le module de sécurité lors d'une transaction réalisée par cette application.

4. Procédé selon l'une des revendications 2 ou 3, **caractérisé en ce que** l'étape de blocage comporte une étape d'arrêt (E114) de la transaction en cours.

5. Procédé selon l'une des revendications 2 à 4, **caractérisé en ce que** l'étape de blocage comporte une étape (E212, E332) de transmission à au moins une application d'un ordre empêchant toute sélection future de ladite au moins une application.

6. Procédé selon l'une des revendications précédentes, **caractérisé en ce qu'**il comprend :
- si la demande de connexion ne peut aboutir:
- l'incrémentation (E208) d'une valeur de tentatives de connexion (CVc) dans une mémoire du module de sécurité lors de l'étape d'envoi d'au moins une commande de connexion au serveur de gestion de l'application,
- comparaison (E210) de la valeur de tentatives de connexion avec une valeur prédéterminée associée (CVcM) ;
- si la valeur de tentatives de connexion est inférieure à sa valeur prédéterminée, alors la demande de connexion est réitérée après un délai déterminé,
- si la connexion est établie et si les droits d'utilisation de l'application sont valides, alors réception d'un ordre de réinitialisation de ladite valeur de tentatives de connexions (CVc).

7. Procédé de gestion d'applications installées sur un module de sécurité (20) associé à un terminal mobile (100), ledit module étant apte à effectuer des transactions liées à au moins une application et à envoyer au moins une commande de connexion à un serveur de gestion de ladite application via le terminal mobile associé, **caractérisé en ce qu'**il comporte les étapes suivantes :
- réception par le serveur de la commande de connexion émise par le terminal mobile suite à l'atteinte dans une mémoire du module de sécurité par au moins une valeur de transaction d'une valeur prédéterminée associée lors d'une transaction réalisée par l'application ;
- vérification des droits d'utilisation de ladite application par le serveur; et
- si les droits d'utilisation de ladite application sont valides alors envoi au module de sécurité, par le serveur, via le téléphone mobile, d'un ordre de réinitialisation de ladite valeur de transaction.

8. Procédé de gestion d'applications selon la revendication 7 comprenant, si les droits d'utilisation de ladite application sont invalides, envoi d'un ordre de blocage de ladite application.

9. Module de sécurité (20) contenant au moins une application apte à effectuer au moins une transaction avec un équipement (200) **caractérisé en ce qu'**il comporte :
- des moyens d'incrémentation d'au moins une valeur de transaction; lors d'une transaction réalisée par l'application ;
- des moyens de comparaison de la au moins une valeur de transaction avec une valeur prédéterminée associée ;
- des moyens de transmission d'au moins une commande de connexion à un serveur de gestion de l'application si la valeur du compteur atteint la valeur prédéterminée; et
- des moyens de blocage de l'application en cas d'échec de ladite au moins une commande.

10. Terminal mobile (100) **caractérisé en ce qu'**il comporte un module de sécurité selon la revendication 9.

11. Serveur de gestion (T, SP1) d'au moins une application installée sur un module de sécurité associé à un terminal mobile, apte à établir des communications avec ladite application au moyen du terminal mobile, **caractérisé en ce qu'**il comprend :
- des moyens de réception d'une commande de connexion afin de vérifier les droits d'utilisation de ladite application, ladite commande étant émise par le terminal mobile;
- des moyens de vérification des droits utilisateur de ladite application ; et
- des moyens d'envoi au module de sécurité d'un ordre de réinitialisation pour réinitialiser une valeur de transaction relative à l'application lorsque les droits d'utilisation de l'application sont valides.

12. Serveur de gestion selon la revendication 11 comprenant en outre des moyens d'envoi d'une commande de blocage de ladite application lorsque les droits d'utilisation de l'application sont invalides

13. Produit programme d'ordinateur comprenant des instructions pour mettre en œuvre les étapes du procédé de contrôle selon l'une des revendications 1 à 6, lorsqu'il est chargé et exécuté par un processeur du module de sécurité.

## Patentansprüche

1. Verfahren zur Steuerung von Anwendungen, die auf einem Sicherheitsmodul (20) installiert sind, das mit einem mobilen Endgerät (100) verknüpft ist, wobei das Modul geeignet ist, Transaktionen, die mit mindestens einer Anwendung in Verbindung stehen, mit einer Ausrüstung (200) durchzuführen, und mindestens einen Verbindungsbefehl an einen Verwaltungsserver der Anwendung über das verknüpfte mobile Endgerät zu senden, **dadurch gekennzeichnet, dass** es die folgenden Schritte umfasst:
- Inkrementieren (E102, E202, E302, E322) mindestens eines Transaktionswerts (CA1, CAc) in einem Speicher des Sicherheitsmoduls bei einer Transaktion, die durch die Anwendung getätigt wird;
- Vergleichen (E104, E204, E304, E324) des Transaktionswerts mit einem verknüpften vorbestimmten Wert (CA1M, CAcM);
- wenn der Transaktionswert seinen verknüpften vorbestimmten Wert erreicht, Senden (E106, E206, E308, E326), durch eine Anwendung des Sicherheitsmoduls (AP1, Z), mindestens eines Verbindungsbefehls an einen Verwaltungsserver der Anwendung, der geeignet ist, Nutzungsrechte der Anwendung zu überprüfen; und
- bei Fehlschlag des Verbindungsbefehls, ein Sperren (E114, E212, E310, E332), das jedwede künftige Auswahl der mindestens einen Anwendung verhindert;
- wenn die Verbindung hergestellt ist und wenn die Nutzungsrechte der Anwendung dann gültig sind, Empfangen, von dem Verwaltungsserver, eines Befehls zum Zurücksetzen des Transaktionswerts.

2. Verfahren nach Anspruch 1, **dadurch gekennzeichnet, dass** der Schritt des Inkrementierens (E202, E322) an einem Transaktionswert, der allen Anwendungen gemein ist, die auf dem Sicherheitsmodul vorhanden sind, bei einer Transaktion, die durch eine beliebige der Anwendungen getätigt wird, erfolgt.

3. Verfahren nach Anspruch 1, **dadurch gekennzeichnet, dass** der Schritt des Inkrementierens (E102, E302) an einem Transaktionswert, der mit einer Anwendung in Verbindung steht, die auf dem Sicherheitsmodul vorhanden ist, bei einer Transaktion, die durch diese Anwendung getätigt wird, erfolgt.

4. Verfahren nach einem der Ansprüche 2 oder 3, **dadurch gekennzeichnet, dass** der Schritt des Sperrens einen Schritt einen Schritt des Stoppens (E114) der laufenden Transaktion aufweist.

5. Verfahren nach einem der Ansprüche 2 bis 4, **dadurch gekennzeichnet, dass** der Schritt des Sperrens einen Schritt einen Schritt (E212, E332) des Übertragens eines Befehls an mindestens eine Anwendung aufweist, der jedwede künftige Auswahl der mindestens einen Anwendung verhindert.

6. Verfahren nach einem der vorhergehenden Ansprüche, **dadurch gekennzeichnet, dass** es Folgendes umfasst:
- wenn die Verbindungsanforderung nicht erfolgreich sein kann:
- das Inkrementieren (E208) eines Werts von Verbindungsversuchen (CVc) in einem Speicher des Sicherheitsmoduls beim Schritt des Sendens mindestens eines Verbindungsbefehls an den Verwaltungsserver der Anwendung,
- Vergleichen (E210) des Werts von Verbindungsversuchen mit einem verknüpften vorbestimmten Wert (CVcM);
- wenn der Wert von Verbindungsversuchen niedriger als sein vorbestimmter Wert ist, wird die Verbindungsanforderung nach einer vorbestimmten Dauer wiederholt,
- wenn die Verbindung hergestellt ist und wenn die Nutzungsrechte der Anwendung gültig sind, Empfangen eines Befehls zum Zurücksetzen des Werts von Verbindungsversuchen (CVc).

7. Verfahren zur Verwaltung von Anwendungen, die auf einem Sicherheitsmodul (20) installiert sind, das mit einem mobilen Endgerät (100) verknüpft ist, wobei das Modul geeignet ist, Transaktionen durchzuführen, die mit mindestens einer Anwendung in Verbindung stehen, und mindestens einen Verbindungsbefehl an einen Verwaltungsserver der Anwendung über das verknüpfte mobile Endgerät zu senden, **dadurch gekennzeichnet, dass** es die folgenden Schritte umfasst:
- Empfangen, durch den Server, des Verbindungsbefehls, der durch das mobiles Endgerät gesendet wurde, nach dem Erreichen, in einem Speicher des Sicherheitsmoduls, durch mindestens einen Transaktionswert, eines verknüpften vorbestimmten Werts, bei einer Transaktion, die durch die Anwendung getätigt wird;
- Überprüfen der Nutzungsrechte der Anwendung durch den Server; und
- wenn die Nutzungsrechte der Anwendung gültig sind, Senden an das Sicherheitsmodul durch den Server,
über das Mobiltelefon, eines Befehls zum Zurücksetzen des Transaktionswerts.

8. Verfahren zur Verwaltung von Anwendungen nach Anspruch 7, umfassend, wenn die Nutzungsrechte der Anwendung ungültig sind, Senden eines Befehls zum Sperren der Anwendung.

9. Sicherheitsmodul (20) enthaltend mindestens eine Anwendung, die geeignet ist, mindestens eine Transaktion mit einer Ausrüstung (200) durchzuführen, **dadurch gekennzeichnet, dass** es Folgendes umfasst:
- Mittel zum Inkrementieren mindestens eines Transaktionswerts; bei einer Transaktion, die durch die Anwendung getätigt wird;
- Mittel zum Vergleichen des mindestens einen Transaktionswerts mit einem verknüpften vorbestimmten Wert;
- Mittel zum Übertragen mindestens eines Verbindungsbefehls an einen Verwaltungsserver der Anwendung, wenn der Wert des Zählers den vorbestimmten Wert erreicht; und
- Mittel zum Sperren der Anwendung bei Fehlschlag des mindestens einen Befehls.

10. Mobiles Endgerät (100), **dadurch gekennzeichnet, dass** es ein Sicherheitsmodul nach Anspruch 9 aufweist.

11. Server zur Verwaltung (T, SP1) mindestens einer Anwendung, die auf einem Sicherheitsmodul installiert ist, das mit einem mobilen Endgerät verknüpft ist, der geeignet ist, Kommunikationen mit der Anwendung mittels des mobilen Endgeräts herzustellen, **dadurch gekennzeichnet, dass** er Folgendes umfasst:
- Mittel zum Empfang eines Verbindungsbefehls, um die Nutzungsrechte der Anwendung zu überprüfen, wobei der Befehl durch das mobile Endgerät gesendet wird;
- Mittel zum Überprüfen der Nutzungsrechte der Anwendung; und
- Mittel zum Senden, an das Sicherheitsmodul, eines Befehls zum Zurücksetzen eines Transaktionswerts bezogen auf die Anwendung, wenn die Nutzungsrechte der Anwendung gültig sind.

12. Verwaltungsserver nach Anspruch 11, ferner umfassend Mittel zum Senden eines Befehls zum Sperren der Anwendung, wenn die Nutzungsrechte der Anwendung ungültig sind.

13. Computerprogrammprodukt umfassend Anweisungen zur Durchführung der Schritte des Steuerungsverfahrens nach einem der Ansprüche 1 bis 6, wenn es durch einen Prozessor des Sicherheitsmoduls geladen und ausgeführt wird.

## Claims

1. Method for controlling applications that are installed on a security module (20) that is associated with a mobile terminal (100), said module being capable of making transactions related to at least one application with an equipment (200), and of transmitting at least one command for connection to a management server for said application via the associated mobile terminal, **characterized in that** it includes the following steps:
- incrementing (E102, E202, E302, E322) at least one transaction value (CA1, CAc) in a memory of the security module when a transaction is made by the application;
- comparing (E104, E204, E304, E324) the transaction value with an associated predetermined value (CA1M, CAcM);
- if the transaction value reaches its associated predetermined value, transmitting (E106, E206, E308, E326), by means of an application on the security module (AP1, Z), at least one command for connection to a management server for the application that is capable of verifying user rights for said application; and
- if the command for connection fails, lockout (E114, E212, E310, E332) preventing any future selection of said at least one application;
- if the connection is established and if the user rights for said application are valid, then receiving, from the management server, an order to reset said transaction value.

2. Method according to Claim 1, **characterized in that** the incrementation step (E202, E322) is carried out on a transaction value that is common to all of the applications present on the security module when a transaction is made by any one of the applications.

3. Method according to Claim 1, **characterized in that** the incrementation step (E102, E302) is carried out on a transaction value that is related to an application present on the security module when a transaction is made by this application.

4. Method according to either of Claims 2 and 3, **characterized in that** the lockout step includes a step (E114) of stopping the transaction that is in progress.

5. Method according to one of Claims 2 to 4, **characterized in that** the lockout step includes a step (E212, E332) of transmitting, to at least one application, an order preventing any future selection of said at least one application.

6. Method according to one of the preceding claims, **characterized in that** it comprises:
- if the connection request cannot complete:
- incrementing (E208) a connection attempt value (CVc) in a memory of the security module during the step of transmitting at least one command for connection to the management server for the application,
- comparing (E210) the connection attempt value with an associated predetermined value (CVcM) ;
- if the connection attempt value is lower than its predetermined value, then the connection request is reiterated after a predetermined period,
- if the connection is established and if the user rights for the application are valid, then receiving an order to reset said connection attempt value (CVc).

7. Method for managing applications that are installed on a security module (20) that is associated with a mobile terminal (100), said module being capable of making transactions related to at least one application and of transmitting at least one command for connection to a management server for said application via the associated mobile terminal, **characterized in that** it includes the following steps:
- receiving, by the server, the command for connection transmitted by the mobile terminal after reaching, in a memory of the security module, an associated predetermined value for at least one transaction value when a transaction is made by the application;
- verifying the user rights for said application by means of the server; and
- if the user rights for said application are valid, then transmitting, to the security module by means of the server via the mobile telephone, an order to reset said transaction value.

8. Method for managing applications according to Claim 7, comprising, if the user rights for said application are not valid, transmitting an order for lockout from said application.

9. Security module (20) containing at least one application that is capable of making at least one transaction with an equipment (200), **characterized in that** it includes:
- means for incrementing at least one transaction value when a transaction is made by the application;
- means for comparing the at least one transaction value with an associated predetermined value;
- means for transmitting at least one command for connection to a management server for the application if the value of the counter reaches the predetermined value; and
- means for lockout from the application if said at least one command fails.

10. Mobile terminal (100), **characterized in that** it includes a security module according to Claim 9.

11. Management server (T, SP1) for at least one application that is installed on a security module that is associated with a mobile terminal, capable of establishing communications with said application by means of the mobile terminal, **characterized in that** it comprises:
- means for receiving a command for connection in order to verify the user rights for said application, said command being transmitted by the mobile terminal,
- means for verifying the user rights for said application; and
- means for transmitting, to the security module, a reset order for resetting a transaction value relating to the application if the user rights for the application are valid.

12. Management server according to Claim 11, further comprising means for transmitting a command for lockout from said application if the user rights for the application are not valid.

13. Computer program product comprising instructions for implementing the steps of the control method according to one of Claims 1 to 6 when it is loaded and executed by a processor of the security module.
